# EUROPÄISCHE PATENTSCHRIFT

(11) **EP 1 397 460 B1**
(45) Veröffentlichungstag und Bekanntmachung des Hinweises auf die Patenterteilung: **10.11.2010**
(21) Anmeldenummer: 02743069.3
(22) Anmeldetag: 22.05.2002
(51) Int. Cl.: C09K 3/18, C09K 21/14, C09K 5/20, C09K 5/10

(54) **UMWELTFREUNDLICHE ENTEISUNGSMITTEL UND VEREISUNGSSCHUTZMITTEL FÜRFLUGZEUGE**
ENVIRONMENTALLY COMPATIBLE DEFROSTING AND ANTIFREEZE AGENTS FOR AEROPLANES
AGENT DE DEGIVRAGE ET AGENT ANTIGIVRAGE ECOLOGIQUES POUR AVIONS

(30) Priorität: 01.06.2001 DE 10127004
(43) Veröffentlichungstag der Anmeldung: 17.03.2004
(73) Patentinhaber: Clariant Produkte (Deutschland) GmbH, 65929 Frankfurt am Main (DE)
(72) Erfinder: JESCHKE, Ingo, 84489 Burgkirchen (DE); STANKOWIAK, Achim, 84503 Altötting (DE); FRAUENHUBER, Sabine, A-5231 Schalchen (AT); WLADAR, Thomas, 84508 Burgkirchen (DE)
(86) Internationale Anmeldenummer: PCT/EP2002/005584
(87) Internationale Veröffentlichungsnummer: WO 2002/099004

(56) Entgegenhaltungen:
- WO-A-02/24841
- WO-A-95/16767
- DE-A- 4 034 217
- DE-A- 19 530 203
- DE-A- 19 957 316
- US-A- 4 954 279
- US-A- 4 971 724
- PATENT ABSTRACTS OF JAPAN vol. 1998, no. 12, 31. Oktober 1998 (1998-10-31) & JP 10 183492 A (LINTEC CORP), 14. Juli 1998 (1998-07-14)
- PATENT ABSTRACTS OF JAPAN vol. 2000, no. 14, 5. März 2001 (2001-03-05) & JP 2000 319532 A (CANON INC), 21. November 2000 (2000-11-21)
- MITSUIKI M; MIZUNO A; TANIMOTO H; MOTOKI M: "Relationship between the Antifreeze Activities and the Chemical Structures of Oligo- and Poly(glutamic acid)s" JOURNAL OF AGRICULTURAL AND FOOD CHEMISTRY, Bd. 46, Nr. 3, 1998, Seiten 891-895, XP002209387

## Beschreibung

Die vorliegende Erfindung betrifft die Verwendung von elektrochemisch inhibierten Wasser/Glykolgemischen, die als Enteisungsmittel und Vereisungsschutzmittel eingesetzt werden. Diese Gemische dienen zur Entfernung gefrorener Niederschläge wie Eis und Schnee insbesondere von Flugzeugoberflächen, sowie zur Vermeidung einer Wiedervereisungen dieser Flächen. Während des Flugzeugstarts sollen diese Fluide durch die dabei auftretenden Scherspannungen von den Flugzeugoberflächen abfließen.

Während der Wintermonate können Flugzeugoberflächen durch gefrorene Niederschläge bedeckt werden. Diese gefrorenen Niederschläge müssen vor dem Start des Flugzeugs entfernt werden, da sie zu einer starken Beeinträchtigung des für den Starts nötigen Auftriebs führen.

Man unterscheidet zwischen Enteisungsmitteln, die vorwiegend zur Entfernung gefrorener Niederschläge eingesetzt werden und Vereisungsschutzmitteln, die auf bereits enteisten und somit gereinigten Flugzeugoberflächen einer Wiedervereisung entgegenwirken sollen. Der Begriff "Enteisungsmittel" steht im folgenden für beide genannten Arten, sofern nicht aus dem Zusammenhang deutlich wird, dass zwischen Enteisungsmitteln und Vereisungsschutzmitteln unterschieden wird.

Im allgemeinen werden zur Entfernung gefrorener Niederschläge Enteisungsmittel auf Wasser/Glykolbasis verwendet. Das Glykol dient als gefrierpunktabsenkendes Mittel. Zusätzlich sind Tenside enthalten, welche die Oberflächenspannung des Enteisungsmittels herabsetzen und somit die Benetzung der Flugzeugoberflächen verbessern. Außerdem enthalten Enteisungsmittel Korrosionsinhibitoren, Entschäumer, Farbstoffe und flammhemmende Substanzen. Solche nichtverdickten Enteisungsmittel zeichnen sich durch Newtonsches Fließverhalten aus. Das bedeutet, dass ihre Viskosität scherunabhängig ist. Entsprechend der SAE (Society of Automotive Engineering)-Konvention werden nichtverdickte Enteisungsmittel mit Newtonschem Fließverhalten als Typ I-Fluide bezeichnet. Typ I-Fluide werden je nach Außentemperatur mit einer unterschiedlichen Menge Wasser verdünnt und mit Sprühfahrzeugen heiß auf die Flugzeugoberflächen aufgetragen. Mit ihrer Hilfe lassen sich effektiv gefrorene Ablagerungen entfernen. Allerdings weisen Typ
1-Fluide nur einen sehr begrenzten Schutz vor Wiedervereisung auf.

Im Gegensatz zu Enteisungsmitteln enthalten Vereisungsschutzmittel zusätzlich noch Verdickersubstanzen. Die dadurch verursachte Viskosität dieser Fluide verbessert den Schutz vor Wiedervereisung, denn das Fluid fließt im Ruhezustand nur sehr langsam von den Flugzeugoberflächen ab und kann somit über einen längeren Zeitraum gefrierende Niederschläge auftauen. Vereisungsschutzmittel erhalten durch Verdickungsmittel ein Nicht-Newtonsches, pseudoplastisches Fließverhalten. Die Viskosität dieser Fluide ist scherabhängig. Im Moment des Flugzeugstarts sinkt die Viskosität des Fluids durch die zunehmende Luftströmung sehr stark ab und kann somit rasch von den Flugzeugoberflächen abfließen. Vereisungsschutzmittel werden erst dann aufgebracht, nachdem die Flugzeugoberflächen von allen gefrorenen Verunreinigungen gereinigt wurden. Je nach Vereisungsschutzzeit unterscheidet man zwischen Typ II-, Typ III- und Typ IV-Fluiden. Typ III-Fluide zeichnen sich durch ein besonders pseudoplastisches Fließverhalten aus, so dass sie zur Enteisung von Flugzeugen mit geringer Startgeschwindigkeit dienen.

Flugzeugenteisungsmittel müssen einer großen Zahl von Anforderungen genügen. Gemäß der SAE-Spezifikationen AMS (Aerospace Material Standards) 1424 und AMS 1428 werden nicht nur das Abfließverhalten und die Vereisungsschutzzeit untersucht, sondern auch viele weitere physikalische Eigenschaften.

Dazu zählt beispielsweise die Scherstabilität von Flugzeugenteisungsmitteln. Die Fluide werden von Sprühfahrzeugen aufgetragen, wodurch eine hohe mechanische Belastung der Fluide bewirkt wird. Die Enteisungsmittel dürfen dabei nicht mehr als 20 % ihrer ursprünglichen Viskosität verlieren. Die Viskosität der Flugzeugenteisungsmittel darf sich während der Lagerung über einen längeren Zeitraum nicht ändern. Ein Flugzeugenteisungsmittel darf nicht korrosiv sein, vor allem nicht gegenüber Aluminium, Magnesium, Stahl und Acrylglas. Schließlich muss es umweltverträglich sein und darf keine Brände unterstützen. Bei den beiden letztgenannten Eigenschaften besteht ein weiterer Entwicklungsbedarf.

US-4 954 279 offenbart die Mikroemulsion eines Öls in einem Wasser/Glykolgemisch. Zusätzlich sind noch Verdickungsmittel und Tenside enthalten. Da alle Komponenten in einer Mikroemulsion vorliegen, werden wichtige Fluideigenschaften wie Scher- und Lagerstabilität, vor allem bei sehr niedrigen Temperaturen, verbessert.

Das in US-5 118 435 offenbarte Enteisungsmittel basiert ebenfalls auf der synergistischen Wirkung, die durch die Kombination von zwei Polyacrylaten als Verdicker erreicht wird. Die Viskosität des Fluids ist temperaturunabhängig, so dass die Filmdicke des aufgebrachten Enteisungsmittels bei jeder möglichen Außentemperatur gering ist und das Fluid somit beim Start des Flugzeugs stets gut abfließt.

US-5 273 673 offenbart Enteisungsmittel, die durch den Einsatz von Alkylphenolethoxylaten deutlich verbesserte Vorhaltezeiten erzielen. Nach US-5 386 968 führt die gleiche Tensidklasse zu einer Verbesserung der Vorhaltezeit verdünnter unverdickter Flugzeugenteisungsmittel.

In US-5 334 323 wird die Neutralisierung der als Verdicker dienenden Polyacrylsäure mit einem Gemisch aus NaOH und KOH durchgeführt. Dadurch ist das Flugzeugenteisungsmittel besonders tiefviskos und fließt daher gut ab.

Gemäß US-5 750 047 ist es gelungen, die Vereisungsschutzzeit verdickter Enteisungsmittel durch gezielte Synthesen vernetzter Polyacrylatmoleküle beträchtlich zu steigern.

US-5 772 912 offenbart umweltfreundliche Enteisungsmittel für die unterschiedlichsten Anwendungen, die auf Xanthan als Verdicker basieren. DE19530203 beschreibt ein Enteisungsmittel, welches Polyasparaginsäure enthält. Gemäß US-5 817 252 wird die Kombination von zwei nicht-ionischen Tensiden mit unterschiedlichem HLB-Wert ausgenützt, um die Diffusion des gefrierenden Niederschlags zu kontrollieren, so dass das Enteisungsmittel erst sehr viel später vereist. Das gleiche Prinzip wurde gemäß US-5 935 488 auf SAE Typ II-Fluide angewendet.

Die US-Patentschriften 5 118 435, 5 268 116, 5 268 117, 5 273 673, 5 334 323, 5 386 968, 5 750 047, 5 817 252, 5 935 488, 5 968 407 offenbaren Benzo- und Tolyltriazol oder deren Alkalimetallsalze als Korrosionsinhibitoren.

Aus dem erwähnten Stand der Technik wird deutlich, dass man sich bei der Entwicklung von Flugzeugenteisungsmitteln bisher fast ausschließlich auf eine Verbesserung der Vorhaltezeit und des Abfließverhaltens konzentriert hat. Es wurde bislang nur wenig unternommen, Flugzeugenteisungsmittel gleichzeitig umweltverträglicher zu machen.

Als Korrosionsinhibitoren werden in Flugzeugenteisungsmittel vorwiegend Benzotriazol oder Tolyltriazol, deren Alkalimetallsalze oder ein Gemisch dieser Substanzen eingesetzt. Die Einsatzkonzentration dieser Korrosionsinhibitoren liegt meist in einem Bereich zwischen 0,2 und 1,7 Gew.-%. Diese Verbindungen schützen nicht nur die beim Flugzeugbau vorwiegend eingesetzten Metalle vor Korrosion, sondern dienen zusätzlich noch zur Vermeidung von Bränden.

Untersuchungen von General Dynamics (General Dynamics AD-A 008 896, "Chemically induced fires in aircraft electrical circuitry by glycol/water solutions. Hazard analysis and elimination methods", H.D. Stevens, 1975) zeigten, dass eine chemische Reaktion einsetzt, sobald ein Tropfen Glykol einen Kurzschluss zwischen zwei versilberten Kupferdrähten verursacht, an denen eine Gleichspannung von
28 Volt anliegt, so wie sie typischerweise in den Stromkreisen von Flugzeugen auftritt. Man beobachtet eine exotherme Elektrolysereaktion, die von Rauch und Flammen begleitet wird.

An Bord eines Flugzeuges tauchen viele elektronische Komponenten, Leitungen und Verbindungen auf, die unvermeidlich mit den unterschiedlichsten Flüssigkeiten in Berührung kommen. Äußerlich kommen Flugzeuge mit Wasser, Landebahnenteisungsmitteln, Flugzeugaußenreinigern und Flugzeugenteisungsmitteln in Kontakt. Alle elektrischen Bauteile in einem Flugzeug sind durch Isolierungen geschützt. Dennoch lässt es sich nicht vermeiden, dass Isolierungen durch Alterung ermüden, so dass elektronische Bauteile in direkten Kontakt mit den oben genannten Substanzen kommen können. Flugzeugenteisungsmittel enthalten Glykole, die sich in solchen Situationen durch exotherme Elektrolysereaktionen leicht entzünden können. Während der Elektrolyse wird an der Kathode Wasserstoff gebildet, während an der Anode eine Oxidation stattfindet. Die Intensität der Elektrolysereaktion wird nicht nur von der Größe der Elektroden und deren Abstand, sondern auch von dem Flüssigkeitsvolumen, der Temperatur und Zusammensetzung des Glykol/Wassergemischs beeinflusst. Bei den im Flugzeugbau typischerweise eingesetzten versilberten Kupferdrähten bildet sich während der Elektrolysereaktion an der Anode Silberoxid. Das Silberoxid katalysiert eine Dehydrierung des Glykols. Der an der Kathode gebildete Wasserstoff kann sich schließlich durch die bei der Elektrolyse freiwerdende Hitze entzünden.

General Dynamics untersuchte unterschiedliche Substanzen, die als Additive in Glykol/Wassergemischen exotherme Elektrolysereaktionen inhibieren können. Dabei zeigte sich, dass Benzotriazol und Tolyltriazol, sowie deren Alkalimetallsalze am besten geeignet waren. Der Wirkmechanismus der Inhibierung ist nicht genau bekannt. Offenbar ziehen die Triazolmoleküle auf der Silberoberfläche auf, so dass keine Elektrolysereaktion mehr auftreten kann.

Gemäß dieser von General Dynamics durchgeführten Untersuchungen werden seit dreißig Jahren in allen Flugzeugenteisungsmitteln Benzotriazol oder Tolyltriazol oder deren Alkalimetallsalze als flammhemmende Substanzen zur Unterdrückung exothermer Elektrolysereaktionen eingesetzt. Diese Substanzen sind als mindergiftig eingestuft. (Tolyltriazol: LD50 oral rat: 675 mg/kg, LCO bei Brachydanio rerio: 42,2 mg/l; Benzotriazol: LD50 oral rat: 560 mg/kg, LQ bei Brachydanio rerio: 100 mg/l). Die biologische Abbaubarkeit beider Substanzen ist nur sehr gering.

Im allgemeinen werden Flugzeugenteisungsmittel nur auf dafür vorgesehenen Flächen eingesetzt, so dass eine große Menge des abgetropften Fluids kontrolliert den Kläranlagen zugeführt werden kann. Dennoch lässt sich nicht vermeiden, dass ein Teil des Fluids während des Taxings und beim Abflug von den Flugzeugoberflächen auf Grünflächen abfließt. Aufgrund der schlechten Abbaubarkeit dieser Additive kann es zu einer Akkumulation der Triazole im Erdreich und Grundwasser nahe der Flughäfen kommen. Es wurden beispielsweise hohe Konzentrationen an Tolyltriazol im Grundwasser des Flughafens Milwaukee, Wisconsin nachgewiesen (Environmental Science & Technology, vol. 32, p. 3834).

Die Aufgabe der Erfindung besteht demnach darin, ein Additiv zu finden, das die elektrochemische Aktivität reduziert und gleichzeitig gut abbaubar und nicht toxisch ist.

Überraschenderweise wurde gefunden, dass Enteisungsmittel und Vereisungsschutzmittel, welche nebst den allgemein üblich bekannten Bestandteilen in derartigen Fluiden, wie beispielsweise Glykole, Verdicker, Tenside und Korrosionsmittel gleichzeitig eine Substanz enthalten, die die elektrochemische Aktivität der Fluide hemmt und die auf Alkalimetallsalze der Polyasparaginsäure oder der Polyglutaminsäure sowie auf einem Gemisch dieser beiden Substanzen basiert, die gestellte Aufgabe erfüllen. Es handelt sich dabei um wasserlösliche, nicht-toxische und biologisch sehr gut abbaubare Verbindungen, die bisher zur Verbesserung der Fluideigenschaften von Flugzeugenteisungsmittel unbekannt waren.

Ein Gegenstand der Erfindung ist die Verwendung von Alkalimetallsalzen der Polyglutaminsäure, Polyasparaginsäure oder deren Mischungen, mit Molekulargewichten von 5000 bis 50.000 g/mol, in Mengen von 0,01 bis 1 Gew.-% bezogen auf das Enteisungs- oder Vereisungsschutzmittel, als flammhemmendes Mittel in Enteisungs- oder Vereisungsschutzmitteln.

Das Verfahren ist besonders vorteilhaft für Flugzeuge anwendbar.

Die Menge an Polyglutaminsäure-/Polyasparaginsäuresalz in den erfindungsgemäßen Enteisungs- oder Vereisungsschutzmitteln beträgt vorzugsweise 0,02 bis 0,5 Gew.-%. Die Molekulargewichte der Polysäuren betragen vorzugsweise 8000 bis 20.000 g/mol.

Bei den erfindungsgemäßen Verwendung von Enteisungs- oder Vereisungsschutzmitteln kann es sich um Typ I-, II-, III- oder IV-Enteisungsmittel handeln. Ihre Zusammensetzung wird im folgenden beschrieben, wobei in jedem Fall die Polyglutaminsäure-/Polyasparaginsäuresalze hinzukommen.

Ein Typ-I Enteisungsmittel oder Vereisungsschutzmittel enthält vorzugsweise 60 bis 97 Gew.-%, insbesondere 80 bis 95 Gew.-% von mindestens einem Glykol aus der Gruppe der Alkylenglykole mit 2 bis 3 C-Atomen und Oxalkylenglykole mit 4 bis 6 C-Atomen.

Ein Typ-I Enteisungsmittel oder Vereisungsschutzmittel enthält vorzugsweise ferner 0,01 bis 1 Gew.-%, vorzugsweise 0,02 bis 0,5 Gew.-%, von mindestens einem anionischen oder nichtionischen Tensid.

Die Typ-I Enteisungsmittel oder Vereisungsschutzmittel enthalten im allgemeinen Wasser als Rest auf 100 Gew.-%.

Typ II-, III- oder IV-Enteisungsmittel oder Vereisungsschutzmittel auf Basis von Glykolen und Wasser enthalten vorzugsweise 20 bis 70 Gew.-%, insbesondere 40 - 60 Gew.-% von mindestens einem Glykol aus der Gruppe der Alkylenglykole mit 2 bis 3 C-Atomen und Oxalkylenglykole mit 4 bis 6 C-Atomen.

Typ-II, III- oder IV-Enteisungsmittel oder Vereisungsschutzmittel enthalten ferner vorzugsweise 0,01 bis 2 Gew.-%, insbesondere 0,03 bis 1,8 Gew.-% eines wasserlöslichen Verdickungsmittels.

Typ-II, III- oder IV-Enteisungsmittel oder Vereisungsschutzmittel enthalten ferner vorzugsweise 0,01 bis 1 Gew.-%, insbesondere 0,02 bis 0,5 Gew.-%, von mindestens einem anionischen oder nichtionischen Tensid.

Typ-II, III- oder IV-Enteisungsmittel oder Vereisungsschutzmittel enthalten im allgemeinen Wasser als Rest auf 100 Gew.-%.

Angaben in Gewichtsprozenten sind bezogen auf das Gewicht des Mittels.

Die Enteisungsmittel enthalten vorzugsweise 20 bis 97 Gew.-% Glykole. Die Glykolbestandteile der erfindungsgemäßen Enteisungsmittel sind vorzugsweise Ethylenglykol, Propylenglykol (1,2-Propylenglykol oder 1,3-Propylenglykol), Diethylenglykol, Dipropylenglykol oder eine Mischung von zwei oder mehreren dieser Glykole, wobei Propylenglykole besonders bevorzugt sind. Die Glykole dienen vor allem zur Absenkung des Gefrierpunkts und stellen neben Wasser die Hauptkomponente der Flüssigkeit dar.

Die Verdickungsmittel sind wasserlöslich. Es werden bevorzugt vernetzte Homo-oder Copolymerisate von ungesättigten Carbonsäuren wie Acrylsäure, Methacrylsäure und deren Derivate wie Ester und Amide, ferner Celluloseether (Alkyl-, Hydroxyalkyl- und Carboxyalkylcelluloseether), Xanthangummi und dergleichen oder Mischungen von solchen wasserlöslichen Polymeren eingesetzt. Die nichtionischen Tensidbestandteile der erfindungsgemäßen Enteisungsmittel sind vorzugsweise alkoxylierte Fettalkohole mit 6 bis 24 C-Atomen im Alkylrest, vorzugsweise 8 bis 18 C-Atomen, alkoxyliert mit 1 bis 10 Molekülen, vorzugsweise 1 bis 8 Molekülen, von mindestens einem C₂- bis C₄-Alkylenoxid. Das Alkylenoxid ist vorzugsweise Ethylenoxid, Propylenoxid oder eine Mischung davon, wobei Ethylenoxid bevorzugt ist. Der Alkylrest im Fettalkohol kann geradkettig oder verzweigt sein, aliphatisch oder aromatisch, gesättigt oder ungesättigt mit vorzugsweise 1 bis 3 Doppelbindungen. Weitere als nichtionische Tenside geeignete Verbindungsklassen sind die Ethylenoxid-Propylenoxid-Blockpolymere, Fettsäurepolyglykolester und Alkylphenolalkoxylate. Als Beispiele seien genannt: Octyl-, Decyl-, Dodecyl-, Isotridecyl-, para-iso-Nonylphenyl-, para-iso-Octylphenyl-und Stearylalkohol, ferner Oleyl-, Cocosalkyl- und Talgalkylalkohol. Der Tensidbestandteil kann auch eine Mischung aus den genannten Fettalkoholen und/oder Fettalkoholethoxylaten sein, so zum Beispiel ein Fettalkoholgemisch mit einem C₁₂-Alkylrest und C₁₄-Alkylrest (C₁₂/C₁₄-Fettalkohol).

Die anionischen Tensidbestandteile der Enteisungsmittel sind vorzugsweise ausgewählt aus der Gruppe bestehend aus Alkylsulfonaten, Olefinsulfonaten, Alkylethersulfaten, Alkylsulfaten, Alkylarylethersulfaten, Polyglykolethersulfaten, Alkylpolyglykoletherphosphaten und Alkylarylpolyglykoletherphosphaten. Alkyl bedeutet vorzugsweise C₆- bis C₂₂-Alkyl, Aryl bedeutet vorzugsweise C₆- bis C₁₂-Aryl.

Zusätzlich können in den Enteisungsmitteln Korrosionsinhibitoren, wie sie für Flüssigkeiten auf der Basis von Glykolen und Wasser gebräuchlich sind, eingesetzt werden. Geeignete Korrosionsinhibitoren sind beispielsweise Alkalimetallphosphate oder Niedrig-Alkylphosphate wie Ethylphosphat, Dimethylphosphat oder Isopropylphosphat. Es können auch Thioharnstoff, Natriumnitrat oder Butin-1,4-diol vorwendet werden.

Ferner können in den Enteisungsmitteln Entschäumer, Farbstoffe, Komplexierungsmittel und Anti-Oxidantien enthalten sein.

Der pH-Wert von SAE Enteisungsflüssigkeiten soll 6,5 bis 10 betragen, vorzugsweise 7 bis 9. Sofern die erfindungsgemäße Flüssigkeit einen solchen Wert nicht ohnehin schon aufweist, kann er einfach durch geeignete pH-Regulatoren eingestellt werden. Im allgemeinen wird der Flüssigkeit eine basische Verbindung zugesetzt. Geeignete basische Verbindungen sind solche aus der Gruppe der Alkalimetallhydroxide wie NaOH und KOH, der Alkylamine wie Butylamin, Hexylamin, Octylamin und Isononylamin und der Alkanolamine wie Mono-, Di-, und Triethanolamin. Die Alkalimetallhydroxide sind bevorzugt.

Die Herstellung des Enteisungsmittels und Vereisungsschutzmittels erfolgt durch Zusammenmischen der einzelnen Komponenten in beliebiger Reihenfolge, was zum Beispiel in einem mit Rührer ausgestatteten Behälter vorgenommen werden kann.

Die Erfindung wird nun durch Beispiele erläutert.

Es wurde zunächst eine Apparatur gebaut, mit deren Hilfe die flammhemmende Wirkung beurteilt werden kann. Anstelle von versilberten Kupferdrahtelektroden wird eine Leiterplatte verwendet. Der Vorteil der Leiterplatte besteht in ihrer definierten Geometrie, die eine hohe Reproduzierbarkeit der Testergebnisse gewährleistet. Die Leiterbahnen sind aus Kupfer gefertigt und werden anschließend versilbert. Die Länge der Leiterbahnen beträgt 10 mm, ihre Weite 1 mm und der Abstand zwischen beiden Bahnen beträgt ebenfalls 1 mm. Die Leiterplatte wird mit Krokodilklemmen an eine 28 V Gleichstromquelle angeschlossen. Zur Beobachtung des Stromflusses zwischen beiden Leiterbahnen wird zusätzlich ein Messgerät zur Aufnahme der Stromstärke in den Stromkreis eingebaut.

Zur Untersuchung der flammhemmenden Wirkung von Additiven wird die Leiterplatte in eine 50 ml-Lösung des Glykol/Wassergemischs eingetaucht und die Stromquelle eingeschaltet. Die Lösung soll dabei eine Temperatur von 20°C aufweisen. Eine geringe elektrochemische Aktivität wird dadurch angezeigt, dass die Stromstärke innerhalb der ersten 15 Minuten den Wert von 25 mA nicht übersteigt. Das bedeutet, dass der Stromfluss zwischen den beiden Leiterbahnen zu gering ist, um eine Elektrolysereaktion auszulösen, so dass keine exotherme Reaktion auftritt und somit keine Entzündung des Glykol/Wassergemischs stattfinden kann.

### Beispiel 1

Es wird ein erfindungsgemäßes SAE Typ I-Enteisungsmittel hergestellt, durch Mischen der folgenden Komponenten (Konzentrat):

| | | |
|---|---|---|
| 80,00 | Gew.-% | 1,2-Propylenglykol |
| 0,20 | Gew.-% | C₁₂/C₁₄-Fettalkohol ethoxyliert mit 5 mol Ethylenoxid |
| 0,10 | Gew.-% | Alkalimetall-Polyaspartat mit 10.000 g/mol |
| 19,7 | Gew.-% | Wasser |

Die oben beschriebene Apparatur zur Ermittlung der elektrochemischen Aktivität von Glykol/Wassergemischen wird zunächst mit Hilfe von zwei Referenzfluiden getestet.

Dazu wird ein Referenzfluid 1, bestehend aus 25 Gew.-% 1,2-Propylenglykol, 0,15 Gew.-% Benzotriazol und 74,85 Gew.-% Standardhartwasser (Zusammensetzung gemäß der Vorschrift in AMS 1424) hergestellt. Das Referenzfluid 1 zeigt während des Testlaufs innerhalb von 15 Minuten eine geringe elektrochemische Aktivität. Die aufgezeichnete Stromstärke liegt stets unterhalb von 25 mA.

Das Referenzfluid 2 besteht aus 25 Gew.-% 1,2 Propylenglykol und 75 Gew.-% Standardhartwasser. Es zeigt eine hohe elektrochemische Aktivität. Die Stromstärke beträgt während des gesamten Testlaufs zwischen 25 mA und 75 mA. Zusätzlich findet an der Kathode eine starke Wasserstoffbildung statt.

Das gemäß Beispiel 1 zusammengesetzte Enteisungsmittel wird mit Standardhartwasser soweit verdünnt, dass der Glykolgehalt ebenfalls 25 Gew.-% beträgt. Während des Testlaufs wird nur eine sehr geringe elektrochemische Aktivität unterhalb 25 mA gemessen. Es wird keine Elektrolysereaktion beobachtet.
Weitere Untersuchungen des unter Beispiel 1 beschriebenen Flugzeugenteisungsmittels ergeben, dass alle weiteren Anforderungen der SAE-Spezifikation AMS 1424 erfüllt werden. So ist die Vereisungsschutzzeit (WSET-Test) sowohl des Konzentrats, als auch der 1:1-Verdünnung mit Wasser größer als 3 Minuten. Das Abfließverhalten aller zu testenden Konzentrationen im Windkanal entspricht bei allen geforderten Temperaturen der Mindestanforderung. Zusätzlich werden alle Materialprüfungstests erfüllt.

### Beispiel 2

Es wird ein erfindungsgemäßes SAE Typ I-Enteisungsmittel hergestellt, durch Mischen der folgenden Komponenten (Konzentrat):

| | | |
|---|---|---|
| 90,00 | Gew.-% | Ethylenglykol |
| 0,15 | Gew.-% | C₁₃-Fettalkohol ethoxyliert mit 10 mol Ethylenoxid |
| 0,20 | Gew.-% | Alkalimetall-Polyglutamat mit 20.000 g/mol |
| 9,625 | Gew.-% | Wasser |

Das gemäß Beispiel 2 zusammengesetzte Enteisungsmittel wird mit Standardhartwasser soweit verdünnt, dass der Glykolgehalt 25 Gew.-% beträgt.
Während des Testlaufs wird nur eine sehr geringe elektrochemische Aktivität unterhalb 25 mA gemessen. Es wird keine Elektrolysereaktion beobachtet.
Weitere Untersuchungen des unter Beispiel 2 beschriebenen Flugzeugenteisungsmittels ergeben, dass auch hier alle weiteren Anforderungen der SAE-Spezifikation AMS 1424 erfüllt werden. So ist die Vereisungsschutzzeit (WSET-Test) sowohl des Konzentrats, als auch der 1:1-Verdünnung mit Wasser größer als 3 Minuten. Das Abfließverhalten aller zu testenden Konzentrationen im Windkanal entspricht bei allen geforderten Temperaturen der Mindestanorderung. Zusätzlich werden alle Materialprüfungstests erfüllt.

### Beispiel 3

Es wird ein erfindungsgemäßes SAE Typ IV-Enteisungsmittel hergestellt, durch Mischen der folgenden Komponenten (Konzentrat):

| | | |
|---|---|---|
| 50,00 | Gew.-% | 1,2-Propylenglykol |
| 0,25 | Gew.-% | vernetzte Polyacrylsäure |
| 0,15 | Gew.-% | C₁₄-Fettalkohol ethoxyliert mit 8 mol Ethylenoxid |
| 0,50 | Gew.-% | Alkalimetall-Polyaspartat mit 5.000 g/mol |
| 0,073 | Gew.-% | Natriumhydroxid |
| 0,073 | Gew.-% | Kaliumhydroxid |
| 48,954 | Gew.-% | Wasser |

Das gemäß Beispiel 3 zusammengesetzte Enteisungsmittel wird mit Standardhartwasser soweit verdünnt, dass der Glykolgehalt 25 Gew.-% beträgt.
Während des Testlaufs wird nur eine sehr geringe elektrochemische Aktivität unterhalb 25 mA gemessen. Es wird keine Elektrolysereaktion beobachtet.
Weitere Untersuchungen des unter Beispiel 3 beschriebenen Flugzeugenteisungsmittels ergeben, dass hier alle weiteren Anforderungen der SAE-Spezifikation AMS 1428 erfüllt werden. So ist die Vereisungsschutzzeit (WSET-Test) des Konzentrats größer als 80 Minuten. Die 1:1-Verdünnung mit Wasser hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

### Beispiel 4

Es wird ein erfindungsgemäßes SAE Typ IV-Enteisungsmittel hergestellt, durch Mischen der folgenden Komponenten (Konzentrat):

| | | |
|---|---|---|
| 50,00 | Gew.-% | 1,2-Propylenglykol |
| 0,33 | Gew.-% | vernetzte Polyacrylsäure |
| 0,12 | Gew.-% | C₁₂/C₁₆-Fettalkohol ethoxyliert mit 6 mol Ethylenoxid |
| 0,50 | Gew.-% | Alkalimetall-Polyglutamat mit 35.000 g/mol |
| 0,18 | Gew.-% | Natriumhydroxid |
| 48,87 | Gew.-% | Wasser |

Das gemäß Beispiel 4 zusammengesetzte Enteisungsmittel wird mit Standardhartwasser soweit verdünnt, dass der Glykolgehalt 25 Gew.-% beträgt.
Während des Testlaufs wird nur eine sehr geringe elektrochemische Aktivität unterhalb 25 mA gemessen. Es wird keine Elektrolysereaktion beobachtet. Weitere Untersuchungen des unter Beispiel 4 beschriebenen
Flugzeugenteisungsmittels ergeben, dass auch hier alle weiteren Anforderungen der SAE-Spezifikation AMS 1428 erfüllt werden. So ist die Vereisungsschutzzeit (WSET-Test) des Konzentrats größer als 80 Minuten. Die 1:1-Verdünnung mit Wasser größer hat eine Vorhaltezeit von mehr als 5 Minuten. Das Abfließverhalten aller zu testenden Konzentrationen im Windkanal entspricht bei allen geforderten Temperaturen der Mindestanforderung. Zusätzlich werden alle weiteren Materialprüfungstests erfüllt.

## Patentansprüche

1. Verwendung von Alkalimetallsalzen der Polyglutaminsäure, Polyasparaginsäure oder deren Mischungen, mit Molekulargewichten von 5000 bis 50.000 g/mol, in Mengen von 0,01 bis 1 Gew.-% bezogen auf das Enteisungs- oder Vereisungsschutzmittel, als flammhemmendes Mittel in Enteisungs- oder Vereisungsschutzmitteln.

2. Verwendung gemäß Anspruch 1, wobei 0,02 bis 0,5 Gew.-% von mindestens einem Alkalimetallsalz der Polyasparaginsäure oder der Polyglutaminsäure oder eines Gemischs daraus vorhanden sind.

3. Verwendung gemäß Anspruch 1 und/oder 2, wobei mindestens ein Alkalimetallsalz der Polyasparaginsäure oder der Polyglutaminsäure oder eines Gemischs daraus mit einem Molekulargewicht von 8000 bis 20.000 g/mol vorhanden ist.

4. Verwendung gemäß einem oder mehreren der Ansprüche 1 bis 3, wobei 20 bis 97 Gew.-% Glykole ausgewählt aus Ethylenglykol, 1,2-Propylenglykol, 1,3-Propylenglykol, Diethylenglykol, Dipropylenglykol, oder eine Mischung von zwei oder mehreren dieser Glykole vorhanden sind.

5. Verwendung gemäß einem oder mehreren der Ansprüche 1 bis 4, wobei 0,01 bis 1 Gew.-% von mindestens einem anionischen und/oder nichtionischen Tensid vorhanden ist.

## Claims

1. The use of alkali metal salts of polyglutamic acid, polyaspartic acid or mixtures thereof, with molecular weights of from 5000 to 50,000 g/mol, in amounts of from 0.01 to 1% by weight, based on the deicing or anti-icing composition, as flame retardant in deicing or anti-icing compositions.

2. The use as claimed in claim 1, wherein there are from 0.02 to 0.5% by weight of at least one alkali metal salt of polyaspartic acid or of polyglutamic acid or of a mixture thereof.

3. The use as claimed in claim 1 and/or 2, wherein there is at least one alkali metal salt of polyaspartic acid or of polyglutamic acid or of a mixture thereof having a molecular weight of from 8000 to 20,000 g/mol.

4. The use as claimed in one or more of claims 1 to 3 wherein there are from 20 to 97% by weight of glycols selected from ethylene glycol, 1,2-propylene glycol, 1,3-propylene glycol, diethylene glycol, dipropylene glycol or a mixture of two or more of these glycols.

5. The use as claimed in one or more of claims 1 to 4, wherein there is from 0.01 to 1% by weight of at least one anionic and/or nonionic surfactant.

## Revendications

1. Utilisation de sels de métaux alcalins du poly(acide glutamique), du poly(acide aspartique) ou de mélanges de ceux-ci, ayant des masses moléculaires de 5 000 à 50 000 g/mole, en quantités de 0,01 à 1 % en poids, par rapport à la composition de dégivrage ou antigivrage, en tant qu'agent ignifuge dans des compositions de dégivrage ou antigivrage.

2. Utilisation selon la revendication 1, dans laquelle est présent 0,02 à 0,5 % en poids d'au moins un sel de métal alcalin du poly(acide aspartique) ou du poly(acide glutamique) ou d'un mélange de ceux-ci.

3. Utilisation selon la revendication 1 et/ou la revendication 2, dans laquelle est présent au moins un sel de métal alcalin du poly(acide aspartique) ou du poly(acide glutamique) ou d'un mélange de ceux-ci, ayant une masse moléculaire de 8 000 à 20 000 g/mole.

4. Utilisation selon une ou plusieurs des revendications 1 à 3, dans laquelle sont présents 20 à 97 % en poids de glycols choisis parmi l'éthylèneglycol, le 1,2-propylèneglycol, le 1,3-propylèneglycol, le diéthylèneglycol, le dipropylèneglycol, ou un mélange de deux ou plus de deux de ces glycols.

5. Utilisation selon une ou plusieurs des revendications 1 à 4, dans laquelle est présent 0,01 à 1 % en poids d'au moins un tensioactif anionique et/ou non ionique.
